(19) Europäisches Patentamt
European Patent Office
Office européen des brevets

(11) **EP 4 423 970 B1**

(12) **EUROPEAN PATENT SPECIFICATION**

(45) Date of publication and mention
of the grant of the patent:
**16.07.2025 Bulletin 2025/29**

(21) Application number: **22808846.4**

(22) Date of filing: **28.10.2022**

(51) International Patent Classification (IPC):
*H04L 9/32* (2006.01)   *H04L 9/08* (2006.01)

(52) Cooperative Patent Classification (CPC):
**H04L 9/321; H04L 9/0844; H04L 9/0877;
H04L 9/3247**

(86) International application number:
**PCT/EP2022/080253**

(87) International publication number:
**WO 2023/073200 (04.05.2023 Gazette 2023/18)**

(54) **METHOD TO ESTABLISH A SECURE CHANNEL**

VERFAHREN ZUR HERSTELLUNG EINES SICHEREN KANALS

PROCÉDÉ POUR ÉTABLIR UN CANAL SÉCURISÉ

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:   **29.10.2021   EP 21306535**

(43) Date of publication of application:
**04.09.2024   Bulletin 2024/36**

(73) Proprietors:
• **THALES DIS FRANCE SAS
92190 Meudon (FR)**
• **THALES
92400 Courbevoie (FR)**

(72) Inventors:
• **MARSEILLE, François-Xavier
92190 Meudon (FR)**
• **LETOURNEUR, Fadela
92190 Meudon (FR)**
• **RUGET, Frédéric
92190 Meudon (FR)**

(74) Representative: **Quintero Romero, Manuel
Thales Dis France SAS
Intellectual Property Department
6, rue de la Verrerie
92190 Meudon (FR)**

(56) References cited:
**WO-A1-2018/112482     US-A1- 2019 362 083**

**Description**

## BACKGROUND OF THE INVENTION

In today's computing, data may exist in three different states: in transit (i.e., data traversing untrusted public or private networks), at rest (i.e., inactive data in storage), and in use (i.e., data being processed while in memory and during computation). Since cryptographic techniques to protect data in transit and at rest have been constantly enhanced and widely deployed thus thwarting threat vectors against network and storage devices, attackers have recently shifted to targeting data-in-use.

As more data is moved to the cloud, mobile, or IoT devices - where processing takes place in remote and difficult to secure locations - the protection of data and applications during execution is increasingly important.

Confidential computing thus provides a solution for protecting data in use by using hardware-based Trusted Execution Environments (henceforth HW TEE). A Trusted Execution Environment (TEE) is a secure area of a processor that assures data integrity, data confidentiality, and code integrity. The hardware-based TEE uses hardware-backed techniques to provide increased security guarantees for the execution of code and protection of data within that environment.

HW TEE basically provides security though the lowest layer of hardware, down to the silicon components, with a minimum of dependencies, by removing the operating system, device driver and peripheral vendors from the list of required trusted parties, thereby reducing exposure to potential compromise. Examples of HW TEE chip providers are Intel with Software Guard Extensions (Intel SGX), or AMD with Secure Encrypted Virtualization (SEV-SNP).

Service providers or cloud service providers such as Amazon Web Services (AWS), Google Cloud Platform (GCP), Microsoft Azure (Azure), OVHCloud, or AlibabaCloud normally comprise one or several HW TEE in their infrastructure in order to offer to their customers the means to use confidential computing for their payload(s). These customers (henceforth "owners") own piece(s) of computing resources e.g., code or data (henceforth "payload") that wishes to execute in the CSP infrastructure.

Nevertheless, confidential computing services are not coming as a simple turnkey solution, especially for going beyond basic security properties. One of these basic security properties is known as remote attestation or simply "attestation", that is, a mechanism to provide a verifiable signature of the running payload provided by the HW TEE and to be verified by either the owner or a 3rd party of trust. This type of evidence must be signed by hardware that can be vouched for by a manufacturer (e.g., Intel or AMD), so that the party checking the evidence has some assurance that it was not generated by malware or other unauthorized parties.

However, HW TEE from different vendors have their own attestation mechanisms (i.e., different technically implemented mechanisms), that are not interoperable among them and only share a minimum set of security features for the attestation verification. Indeed, all HW TEE default attestation mechanisms ensure that the HW TEE is genuine and the payload is the expected one (measurement signature indicating that it was not modified) further being able to inform about its current state in the execution.

Furthermore, in order to prevent replay attacks against the attestation, the attestation mechanism may involve a nonce sent from the owner.

In addition to these basic security features, there is no built-in mean to guarantee that any subsequent communication from the owner will occur with the same attested payload (and not a modified one). For instance, if the owner wishes to provision some secret(s) to that payload, he/she will be uncertain if the very same payload is being provisioned with these secret(s) if the attestation was already performed.

Finally, as of today, the attestation mechanism is not handled as a first class citizen by the CSP or commonly used software stacks of the public cloud. There are various prior art techniques to facilitate authentic remote attestation process, for example, one disclosed in reference US2019/362083A1 (hereinafter US'083) and another disclosed in WO2018112482A1 (hereinafter WO'482). The reference US'083 mentions about electronic transaction platform 100 for receiving and processing secure consumer data such that the platform requires a separate Trusted Platform Module (TPM) to realize trust in remote attestation process and the reference WO'482 is intended for distributing attestation key and certificate in trusted computing. The prior art techniques are not efficient in enabling a secure and trusted attestation process with a great ease.

Thus, there is a need in the confidential computing industry for an easier and interoperable solution that allows the owner to provision secret(s) in the very same attested payload.

## SUMMARY OF THE INVENTION

The present invention provides a solution for the aforementioned problems by a method to establish a secure channel between a party (e.g., the owner of a payload or a broker), and the software payload itself when running into a hardware-based trusted execution environment, HW TEE according to claim 1, a related system according to claim 13, a party according to claim 14, a software payload according to claim 15 and a HW TEE according to claim 16. In dependent claims, preferred embodiments of the invention are defined.

In a first inventive aspect, the invention provides a computer-implemented method to establish a secure channel between a party, for instance a broker, and a software payload of an owner when running into a hardware-based trusted execution environment, HW TEE, at the instance of a cloud service provider, the method comprising the following steps:

- sending, by the party, at least a nonce to the software payload;
- generating, by the software payload, a payload key pair: public key and private key;
- mixing, by the software payload, the payload public key with the nonce;
- computing, by the HW TEE, an attestation using at least this nonce mixed with the payload public key;
- sending, by the software payload, at least the attestation, and the payload public key to the party;
- verifying, by the party, the attestation using the sent nonce mixed with the received payload public key;
- generating, by the software payload and the party, a session key between them; and
- establishing a secure channel between the owner and the software payload running into the HW TEE.

As mentioned, the attestation process requires that the party eventually send a nonce to the payload (or to HW TEE) for verification purposes. As known, the HW TEE is the entity handling the nonce, but usually it passes through the payload. Throughout the following description, a nonce will be understood as a data string generated at the party side (either by the party's device or by another interconnected device) to be used only once in a cryptographic communication. The fact that the nonce is sent by the party does no presuppose that the attestation flow is started by the party. It may be equally started by the payload itself, when starting for example.

That is, in a particular embodiment, the workflow starts either because the payload sends a message on start-up or because the CSP sends a notification that the payload is ready or because the party checks periodically whether the payload is ready.

The nonce may be either a random or a pseudo-random number, or also contain blocks of different information such as a timestamp or identifiers (owner's, payload's, HW TEE's, etc.). Nevertheless, the skilled person shall recognize that the actual format, size and other informative data sent in the nonce is specific to the technology of the HW TEE vendor. For instance, some technologies require that the original nonce be first hashed to maintain a length.

Then, in a typical process, once the party provides the payload with the nonce, it is passed to the HW TEE as part of the traditional attestation process on the HW TEE side. In other words, the nonce becomes part of the data signed by the HW TEE and, therefore, if the owner is able to verify the attestation it means that the same nonce was used.

The present invention proposed mixing with this nonce other data generated by the payload (in particular a generated payload public key), to be also signed by the HW TEE. In a preferred embodiment, the payload generates an ECDSA key pair (payload private key, payload public key).

Consequently, if the party also knows this payload public key, it will be able to perform the same mixing operation and by verifying the attestation, it will be sure that these data were indeed signed by the HW TEE.

In this way, the method according to the invention binds a key pair generated by the payload to the HW TEE. Therefore, if the owner is able to verify the attestation then it is certain that this key pair was generated by (or inside) the payload running under confidential computing.

From this point, both the software payload and the party can generate a session key (shared secret) to establish a secure channel between them from the point of view of the party. Then, this shared session key can be used as the key for a symmetric algorithm like Advanced Encryption Standard (AES) or Triple Data Encryption Algorithm (3DES) thereby establishing the secure channel.

Advantageously, the present invention allows leveraging the capabilities in common of HW TEEs from different vendors to guarantee the authenticity of these public elements while providing a multi-CSP method to establish a secure channel between party and payload.

Once the secure channel is established, the party itself (or other player benefiting from this secure channel) is certain that can inject or provision some secret(s) in the very same attested payload without being exposed.

As mentioned, the party according to the invention may be the owner of the payload or a broker. While the owner may be any customer of the CSP wanting to use confidential computing to run its payload, a broker is a 3<sup>rd</sup> party of trust handling flows and processes on the behalf of the owner. In the present invention, the broker provides payload life cycle management regarding attestation and provisioning for confidential computing purposes. It does require a relationship of trust between the broker and the owner up to the initial provisioning.

In a preferred embodiment, the party is a broker.

The skilled person would recognize that his 3<sup>rd</sup> party of trust is other than the CSP because, among others, one of the key properties in confidential computing is to be protected against the CSP which can be verified by the attestation mechanism. In other words, the CSP is not legitimate to report to the owner that the attestation was verified.

Thus, the present invention allows the CSP to provide HW TEE infrastructure as a service not being involved in the attestation/provisioning flow for a clear separation of duties.

By using a broker, the CSP is kept out of the scope of the confidential computing attestation verification and, advantageously, the owner can delegate to it this complex process while, in addition, the broker will be entrusted to generate traditional credentials for the payload to be able to access the native cloud environment.

Accordingly, by using a broker, any unskilled owner may also insert seamlessly in the cloud native ecosystem, since the proof of the attestation has been transformed into means that are usable by existing, deployed and broadly used software stacks of the public cloud.

As the skilled person knows, the session key (shared secret) between the party and the payload may be generated based on different key-agreement protocols such as any public key-based key-agreement protocol.

For instance, in a particular embodiment, the method further comprises the following steps for generating the session key between the software payload and the party using a non-authenticated key-agreement protocol such as one based on an Elliptic Curve Diffie-Hellman, ECDH, protocol:

- generating and sending, by the party, party public data to the software payload;
- generating, by the software payload, payload public data and signing this payload public data using the generated payload private key;
- sending, by the software payload, the payload public data and the signed payload public data to the party;
- verifying, by the party, the signed payload public data using the received payload public key; and
- computing, by the software payload and the party, a shared secret using party public data and payload public data, respectively.

Since it uses a non-authenticated key-agreement protocol, it further requires that the public element(s) coming from the payload be signed using the just generated payload private key. In this way, the party can ensure the origin of these public elements preventing any Man-In-The-Middle (MIM) attacks.

Nonetheless, the payload may also use the payload private key to sign any other data exchanged with the party apart from the ECDH public elements. For instance, payload private key may be used to sign other data during the establishment of the secure channel itself, later on for subsequent exchanges, etc.

Since some data has to be public, in a preferred embodiment, the payload will generate the ECDSA Key Pair (payload public key, payload private key) and compute hash(payload public key) that will become this public data.

Then, this hash(payload public key) is mixed, for instance using an XOR function, with the nonce coming from the owner attestation request. Finally, XOR(hash(payload public key), nonce) is passed through the HW TEE during the attestation computation.

In addition, through the lifetime of the payload, it may be necessary for the party to set subsequent communications with it, for instance to perform secret(s) rotation. However, maintaining the secure channel through the whole lifetime of the payload would be too costly in term of network resources.

According to the prior art, the option would be to re-do the attestation procedure to re-establish a secure channel between the payload and the party but, as mentioned, in that case the party cannot be sure whether the same attested payload is being provisioned. This is due to a core limitation of the existing HW TEE technology that does not provide confidentiality for the payload before its execution, but only its integrity.

Consequently, there is no guarantee for the party that it would re-establish a secure channel with the very same payload, and there is no guarantee for the payload that it will be re-contacted by the same party. As the skilled person would appreciate, depending on the use case, a lack of strong pairing between the payload and the party may prevent confidential computing from being an option in some use cases.

Therefore, in a particular embodiment, once the secure channel has been established between the party and the software payload running into the HW TEE, the party sends a party authentication means to the payload, this party authentication means being configured to allow subsequent authentication of the owner to the payload to re-establish a secure channel.

In other words, in this embodiment, the method ensures that once the payload has been provisioned by the party with the secret(s), it is not possible for any other parties to break this "mating". Accordingly, this method prevents a rogue party from masquerading the genuine one once, for instance, the payload has been provisioned with sensitive data.

In a preferred embodiment, the party sends the party authentication means just after establishing the secure channel with the payload. That is, not after re-establishing the channel to avoid a rogue party-situation. In this way, it is ensured that subsequent communications will still occur between the exact same instance of the payload and the same party and, more importantly, that subsequent re-establishments of the secure channel will happen between the parties that established the original secure channel.

To do so, for instance, these owner authentication means will be stored in the memory of the payload under the protection of the HW TEE, ensuring that it cannot be compromised in both confidentiality and integrity. That is, in a particular embodiment, after receiving the authentication means, the software payload stores it persistently in a memory of the HW TEE architecture.

A secure channel may be closed and re-opened on demand, without need to repeat the entire attestation flow again.

In an embodiment, the party generates a party key pair: public key and private key using, for example, ECDSA, and then sends the party public key to the software payload for subsequent authentication purposes. Similarly, the payload private key may be kept in the same (or different) memory, e.g., RAM, under the protection of the HW TEE. That is, in a particular embodiment, after generating the payload private key, the software payload stores it in a memory under the protection of the HW TEE architecture.

By doing so, it will be possible to have a true mutual authentication for the subsequent communication between the payload and the original owner, by using both the public/ private keys on payload side, generated at the time of the initial attestation and the public / private keys on the owner side.

For HW TEEs having natively data sealing (term used by Intel) capabilities to store securely data in persistent storage, the payload private key and the owner authentication means can be stored therein. To do so, for instance, the HW TEE may access persistent storage (e.g., a hard disk drive HDD or solid-state drive SSD) and generates its own encryption keys so that the payload can encrypt the sensitive data it wants to store therein.

The HW TEE may also provide read-write memory for the payload such as the RAM that is typically encrypted by the HW TEE as part of the normal encryption of the payload. Unfortunately, since the payload keeps any sensitive data as part of its own RAM memory, there is an issue when the payload is stopped.

Consequently, the present invention advantageously defines a mean to provide sealing capabilities to the payload to ensure the confidentiality of its persistent storage. This means that if this payload is modified or the HW TEE is modified or tampered-with, the present invention still ensures that the payload will not be able to retrieve its persistent storage protected by the sealing capability.

To that end, in a particular embodiment, the method allows to persistently store data by the payload once the secure channel has been established, wherein the method comprises the following steps:

- generating, by the party, a payload identifier using information shared from the payload during the establishment of the secure channel;
- generating, by the party, a key initiator and persistently storing at the party side the key initiator associated to the payload identifier;
- sending, by the party, the payload identifier and the key initiator to the payload;
- using the key initiator, by the payload, to encrypt data; and
- persistently storing, by the payload, the encrypted data and the payload identifier.

Accordingly, this initiator key is not stored by the payload and will be deleted after used.

In a particular embodiment, the party encrypts this payload identifier using a first encryption key, e.g., a symmetric key, before sending it to the payload for its persistent storing in encrypted form.

In a particular embodiment, the key initiator is a symmetric key.

In a preferred embodiment, the key initiator is first passed through a key derivation function, KDF, by the payload, to generate a symmetric key that encrypts the data.

In a preferred embodiment, the key initiator is passed through a key derivation function, KDF, by the payload, to generate a Message Authentication Code (MAC) that allows the payload to subsequently check the integrity of the persistently stored data.

As mentioned, the owner trusts the broker to perform the attestation and provisioning of specific secrets for sealing and of a mean for the payload to authenticate to the owner. Then, the owner will be able to check that the attestation has been performed.

As a result, the owner can authenticate and communicate securely with the payload to, in addition, for instance, inject and manage applicative assets to permit the payload to access further service provider(s). According to the invention, a service provider is a 3$^{rd}$ party (i.e., different from the broker) used by the owner to provide e.g., security services to its payload such as an external key management system.

Once the persistent storage capabilities of the payload are enabled, the party (broker or owner) can inject further secret(s) for different purposes.

In a first scenario, by injecting some secrets, the payload may prove to a user accessing, for instance, a web-services provided by the payload that it has been attested by the party. Throughout this document, a user is a user or customer of the service provided by the owner through its payload.

In this embodiment when the running payload provides a web-service, the method further comprising:

- signing, by the party, a certificate, such as a X.509 certificate private key, and
- sending, by the party, the signed certificate to the payload which will use the certificate to establish connectivity, such as HTTPS connectivity, to the web-service.

Advantageously, it proves easily that the web services is running in an attested HW TEE and fits naturally in environment using HTTPS connectivity like web-browser.

In a second scenario, the payload can prove to the owner that it has been attested by the broker when the owner wants to manage its payload using, for instance, a Secure Sockets Layer, SSL connection. In other words, the invention allows the owner of the payload to directly communicate with and manage the payload.

In this embodiment, assuming that the party is the broker, the method comprises the following steps:

- generating, either by the payload itself or the broker, a Secure Sockets Layer, SSL, payload key pair: public key and private key;
- storing persistently, by either the broker and/or the owner, the SSL payload public key;
- storing persistently, by the payload, the SSL payload private key;
- generating, either by the owner itself or the broker, a SSL owner key pair: public key and private key;
- storing persistently, by either the broker and/or the payload, the SSL owner public key; and
- storing persistently, by the owner, the SSL owner private key.

In addition, the payload uses the stored SSL payload private key for configuring a Secure Shell, SSH, server. In other words, the payload uses it to configure the identity of the SSH server (ex: /etc/.ssh/*_key*).

On the other hand, the owner uses the stored SSL payload public key to automatically authenticate the payload when accessing it through an SSH session. In other words, the broker sends the SSL payload public key to the owner, so it can update its "known_hosts" configuration file to be able to automatically authenticate the payload when accessing it through a SSH session (ex: ~/.ssh/known_hosts).

Advantageously, this provides an easy manner to use SSL connectivity for remote payload management.

In a preferred embodiment, at least one (preferably both) of the SSL payload key pair and the SSL owner key pair is generated by the broker. Advantageously, since the broker is trusted by the owner, this embodiment is advantageous in terms of SLAs and performance.

Nevertheless, in an alternative embodiment, one or both of these key pairs may be generated by another party such as:

- the SSL payload key pair and is generated by the payload itself and the SSL payload public key may be sent, by the payload, to either the broker (to be forwarded to the owner) or directly to the owner; and/or
- the SSL owner key pair is generated by the owner and the SSL owner public key may be sent to the broker for its provisioning in the payload or, alternatively, directly provisioned by the owner.

In a third scenario, the payload can prove to a service provider that has been attested by the broker aiming at using it. That is, the present invention allows to transform the attestation proof in an actionable mean for accessing a common service provider.

More in particular, it allows the owner to have a transfer of proof of the attestation/provisioning flow into a form that is usable in commonly deployed environments.

By doing so, both users and service providers can benefit from confidential computing advantages without having to change their current practices.

In this embodiment, the method further comprises the following steps:

- configuring, by the owner or the party, a second party to accept a token such as a JSON Web Token, JWT-like token;
- generating, by the party, a token according to policies from the owner;
- signing, by the party, the token;
- sending, by the party, the signed token to the payload; and
- storing persistently, by the payload, the token.

Advantageously, this embodiment fits naturally in environment using Application Programming Interfaces, APIs. That is, the broker is considered as the Identity Provider, IdP, for the payload, while the owner configures the service provider to access JWT from the broker.

In a preferred embodiment, the owner sets at least one policy for delegating the management of the life cycle of at least one credential to the party.

In other words, the life cycle management of the different credentials can be delegated to the broker by the owner and managed by policies: periodic renewal of certificate(s) (first scenario), periodic renewal of SSL public key (second scenario), short-lived JWT (third scenario).

The liveness duration, the decision to (or not to) re-attest, the periodicity of the re-attestation, etc. is also part of the policies to be defined by the owner and provided as configuration policies of the life cycle services offered by the broker.

In a second inventive aspect, the invention provides a computer-implemented method to re-establish an authenticated secure channel between a party and the software payload of an owner when running into a hardware-based trusted execution environment, HW TEE, at the instance of a cloud service provider, the method comprising the following steps:

- establishing a secure channel according to the method of any of claims 1 to 10;
- generating, by the party, new owner public data
- signing, by the party, this new party public data and sending it to the software payload;
- retrieving, by the software payload, party authentication means configured to allow subsequent authentication of the party to the payload to re-establish a secure channel;
- verifying, by the software payload, the signed new party public data by using the party authentication means;
- generating, by the software payload, new payload public data and signing this payload public data using the payload private key;
- sending, by the software payload, the new payload public data and the signed new payload public data to the party;
- verifying, by the party, the signed new payload public data using the payload public key;
- computing, by the software payload and the party, a new shared secret using new party public data and new payload public data, respectively;
- generating, by the software payload and the party, a session key between them; and
- re-establishing a secure channel between the party and the software payload running into the HW TEE.

In a third inventive aspect, the invention provides a system for establishing a secure channel between party and a software payload of an owner when running into a hardware-based trusted execution environment, HW TEE, at the instance of a cloud service provider, the system comprising:

- the party being configured to communicate with the software payload running into the HW TEE, the payload itself and the HW TEE operated by a cloud service provider;

wherein

- the party is further configured to send at least a nonce to the software payload;
- a software payload is further configured to:

  ◦ receive at least the nonce sent from the party;
  ◦ generate a payload key pair: public key and private key;
  ◦ mix the payload public key with the nonce; and
  ◦ send to the HW TEE said payload public key mixed with the nonce;

- the HW TEE is configured to compute an attestation using at least this received nonce mixed with the payload public key; and to send said attestation to the software payload;
- the software payload is further configured to send at least the attestation, and the payload public key to the party;
- the party is further configured to receive the attestation and the payload public key, mix the received payload public key with the sent nonce, and verify the received attestation using this mixed information; and
- the software payload and the party being further configured to generate a session key between them thus establishing the secure channel between them.

In a fourth inventive aspect, the invention provides for establishing a secure channel with the software payload when running into a HW TEE at the instance of a cloud service provider, the party being configured to communicate with the software payload when running into the HW TEE, wherein
the party is further configured to

- send at least a nonce to the software payload for mixing the nonce with a generated payload public key; and
- to receive, from the software payload, said payload public key and an attestation computed by the HW TEE using said mix of the nonce with the payload public key;
- mix the received payload public key with the sent nonce, and verify the received attestation from the software payload using this mixed information; and
- generate a session key thus establishing the secure channel with the software payload.

In a fifth inventive aspect, the invention provides a software payload for establishing a secure channel with a party when running into a HW TEE at the instance of a cloud service provider, the software payload being configured to run into the HW TEE operated by the cloud service provider;
wherein the software payload is further configured to:

- receive at least a nonce from the party;
- generate a payload key pair: public key and private key;
- mix the payload public key with the nonce; and
- send to the HW TEE said;
- receive, from the HW TEE, a computed attestation using said mix of the nonce with the payload public key;
- send at least said attestation, and the payload public key to the party; and
- generate a session key thus establishing the secure channel with the party if the attestation if verified by the party.

In a sixth inventive aspect, the invention provides a hardware-based trusted execution environment, HW TEE, at the instance of a cloud service provider for establishing a secure channel between a party and a software payload when running into the HW TEE, wherein the HW TEE is operated by the cloud service provider;
wherein the HW TEE is configured to:

- received a payload public key generated by the payload mixed with a nonce originally sent by the party;
- compute an attestation using at least this received nonce mixed with the payload public key; and
- send said attestation to the software payload for its further verification by the party.

All the features described in this specification (including the claims, description and drawings) and/or all the steps of the described method can be combined in any combination, with the exception of combinations of such mutually exclusive features and/or steps.

## DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.

Figure 1    This figure shows an embodiment of a system according to the invention comprising a party, and a payload running into a HW TEE.

Figure 2    This figure shows a schematic flowchart of an method to establish a secure channel between a party and the software payload when running into a HW TEE at the instance of a cloud service provider.

Figure 3    This figure shows a schematic diagram of an embodiment of the method to establish a secure channel between the party and the software payload.

Figure 4    This figure shows a schematic diagram of an embodiment of the method for providing authentication means.

Figure 5    This figure shows a schematic diagram of an embodiment of the method to re-establish a secure and authenticated channel between the party and the software payload.

Figure 6    This figure shows a schematic flowchart of a method to persistently store sensitive data by the payload.

Figure 7    This figure shows a schematic diagram of an embodiment of the method to persistently store sensitive data by the payload.

Figure 8    This figure shows a schematic diagram of an embodiment of the method to retrieve sensitive data persistently stored by the payload.

Figure 9    This figure shows a schematic diagram of an embodiment of the method to establish HTTPS connectivity for a user of a web-service provided by the attested payload.

Figure 10    This figure shows a schematic diagram of an embodiment of the method to setup a SSL connectivity between the owner and its attested payload.

Figure 11    This figure shows a schematic diagram of an embodiment of the method to establish SSL connectivity for the owner of the attested payload for its remote management.

Figure 12    This figure shows a schematic diagram of an embodiment of the method to prove to a service provider that the payload has been attested for its further use.

## DETAILED DESCRIPTION OF THE INVENTION

As it will be appreciated by one skilled in the art, aspects of the present invention may be embodied as a method or a system for establishing a secure channel, a method to re-establish the secure channel, a party, a software payload or a HW TEE.

Herein below, it is considered a case in which the method according to the invention for establishing a secure channel is implemented by, locally at a server side, an HW TEE at instances or premises of a cloud service provider.

According to another embodiment, the party (either the payload's owner or another 3$^{rd}$ party of trust such as a broker) is implemented by a PC 1 or a server 9, and may also be a SE host device that cooperates with a TEE that is adapted to carry out the functions that are carried out by the party.

The invention does not impose any constraint as to a kind of the party's device (so-called "party") or cloud server provider's HW TEE. Examples of party's devices can be a PC, a mobile phone, a server, an IoT device, etc.

As mentioned, even if the party may be the payload's owner or a 3$^{rd}$ party of trust such as broker, for illustrative purposes, in the following, the party will be a broker.

Once the payload starts, depending on the owner choice (e.g., set by policies), the payload 2 may directly contact the broker 1, 9 or, alternatively, the owner 7 may instruct the broker 1, 9 to contact the payload.

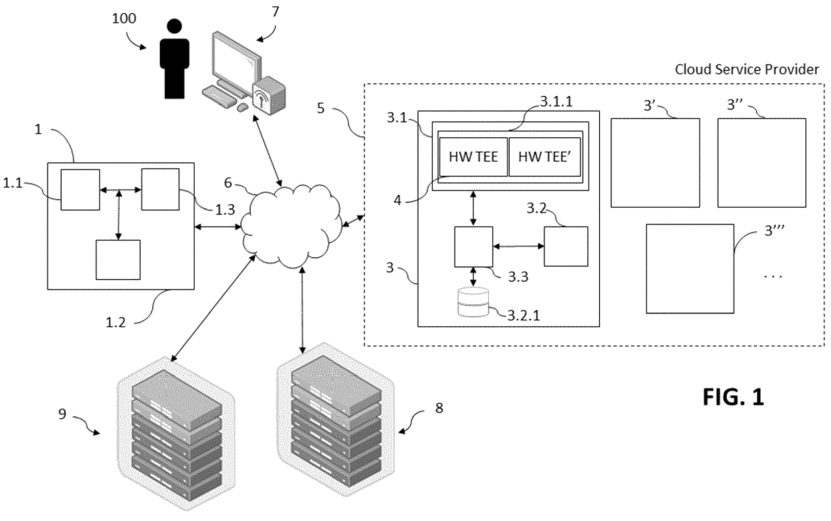

**Figure 1** depicts schematically a system of a party (e.g., the owner 7 or the broker(s) 1, 9) and a software payload 2 running into a HW TEE 4 at the instance or premises of a cloud service provider 5.

The party, when acting as a broker, may be embodied as a PC 1 and/or as a single 9 or a collection of interconnected servers. The invention also envisages the presence of a service provider's server 8.

The owner (i.e., "owner's device") is depicted in figure 1 also as a PC 7 operated by a user 100. The PC 7 may be configured to receive, from the user 100 at least his/her login credentials for at least one of his/her end-user account(s), verify them and let said user to run applications and/or initiate different processes such as sending a code as a whole or part (i.e., "trusted portion") of an application, i.e., the payload 2, to be executed in the HW TEE.

In the following, the description about the PC 1 applies to the owner 7 and any or both of the servers 8, 9.

The PCs 1 or 7 (or even the server(s) 8, 9) includes one or several (micro)processors (and/or a (micro) controller(s)) 1.1, as data processing means, comprising and/or being connected to one or several memories 1.2, as data storing means, comprising or being connected to means for interfacing with the user, such as a Man Machine Interface (or MMI), and comprising or being connected to an Input/Output (or I/O) interface(s) 1.3 that are internally all connected, through an internal bidirectional data bus.

The I/O interface(s) 1.3 may include a wired and/or a wireless interface, to exchange, over a contact and/or Contactless (or CTL) link(s), with e.g., the user 100 or any other user in charge of the PC 1 or server(s) 8, 9. Within the present description, the adjective "CTL" denotes notably that the communication means communicates via one or several Short Range (or SR) type Radio Frequency (or RF) links.

The PCs 7, 1 may be connected, wired (not represented) or wirelessly, to another device operated either at the owner's instances or at the broker's instances, respectively. That is, the owner 7 may be also embodied as a server device configured to execute data / code, optionally split it into trusted and untrusted portions, and send the trusted portions to a CSP's HW TEE for its execution or, alternatively, the broker 1, 9 can do it on its behalf. Examples of payloads as highly sensitive data that must be protected and securely processed is personally identifiable information (PII), healthcare, financial, or intellectual property data.

The PC MMI may include a display screen(s), a keyboard(s), a loudspeaker(s) and/or a camera(s) (not represented). The PC MMI allows a user to interact with the PC 1. The PC MMI may be used for getting data entered and/or provided by the user.

The PC memory(ies) 1.2 may include one or several volatile memories and/or one or several non-volatile memories. The PC memory(ies) 1.2 may store data, such as an ID(s) relating to the PC, that allows identifying uniquely and addressing the PC. The PC ID(s) may include a unique ID, such as a UUID, a Uniform Resource Locator (or URL), a Uniform Resource ID (or URI), and/or other data that allows identifying uniquely and addressing the PC.

The PC memory(ies) 1.2 stores the Operating System (OS) and an application which is adapted to send the payload (also known as "workload") to the CSP to be processed within one of the HW TEE. The owner's application that allows sending this payload may be a web-based portal (e.g., Amazon Web Service, AWS, management console), or even an open source application (e.g., AWS command line interface).

The PC 1 and/or 7 themselves, or e.g., in combination with server 9, are further configured to send information over a communication network 6 (e.g., Transport Layer Security, TLS) to the CSP end 5. In particular, the broker 1 and the cloud service provider infrastructure 5 may communicate via one or more Application Program Interfaces, APIs, using HTTPS over TLS.

In addition, the owner 7 can also establish SSL connectivity directly with the payload running on the HW TEE of the CSP 5. Furthermore, the running payload 2 can access services of the service provider 8. Also, if the payload 2 provides a web-service, different users 110 thereof can also establish HTTPS connectivity with the running payload 2. Details about how to accomplish these wireless, secure connections will be described infra.

At the CSP end 5, or CSP facilities, one or more computing devices 3, 3', 3", 3''' with one or more HW TEEs 4, 4' are provided as secure enclave(s) for confidential computing services.

As shown in figure 1, the computing device 3 includes a processor 3.1, a memory 3.2, and an I/O subsystem 3.3, and a data storage device 3.2.1. Examples of computing devices 3 suitable for confidential computing are those described in US 2021/0117246 A1 in relation with secure enclave supports such as Intel® Software Guard Extensions (SGX) technology.

Thus, the processor 3.1 may be embodied as a single or multi-core processor(s), digital signal processor, microcontroller, or other processor or processing/controlling circuit including the secure enclave support 3.1.1, which allows the processor 3.1 to establish a trusted execution environment 4 known as a secure enclave, in which executing code (i.e., payload) may be measured, verified, and/or otherwise determined to be authentic.

Additionally, code and data included in the secure enclave may be encrypted or otherwise protected from being accessed by code executing outside of the secure enclave. For example, code and data included in the secure enclave may be protected by hardware protection mechanisms of the processor 3.1 while being executed or while being stored in certain protected cache memory of the processor 3.1. The secure enclave support 3.1.1 may be embodied as a set of processor instruction extensions that allows the processor 3.1 to establish one or more secure enclaves in the memory 3.2.

The memory 3.2 may be embodied as any type of volatile or non-volatile memory or data storage capable of performing the functions described herein. In operation, the memory 3.2 may store various data and software used during operation of the computing device 3 such as operating systems, applications, programs, libraries, and drivers. As shown, the memory 3.2 may be communicatively coupled to the processor 3.1 via the I/O subsystem 3.3, which may be embodied as circuitry and/or components to facilitate input/output operations with the processor 3.1, the memory 3.2, and other components (not shown) of the computing device 3.

The data storage device 3.2.1 may be embodied as any type of device or devices configured for short-term or long-term storage (i.e., persistent storage) of data such as, for example, memory devices and circuits, memory cards, hard disk drives, solid-state drives, non-volatile flash memory, or other data storage devices. The secure enclave platform 3.1.1 may have native mechanisms for sealing or persistently storing pre-encrypted data and native standard key exchange to setup an encrypted tunnel for data transport between components of the computing device 3 (for instance, for local attestation purposes).

In this illustrative embodiment, the components of the computing device 3, or the secure enclave platform 3.1.1 itself, additionally comprise hardware attestation features to prove their authenticity. The root of trust in the computing device 3 manages the security credentials (keys, certificates) used with this purpose. As mentioned, the attestation process measures code and data of the running payload, for instance when it is starting up and attests it when the owner requests attestation.

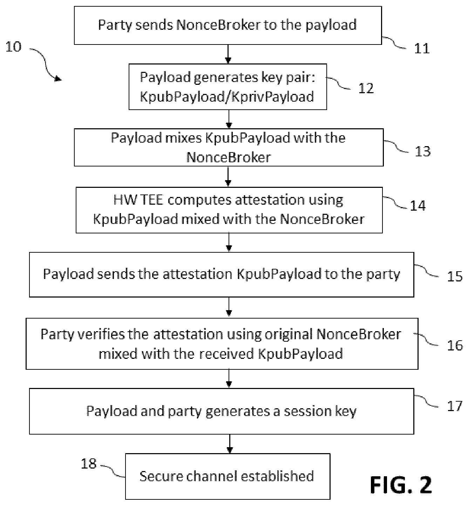

**Figure 2** depicts a schematic flowchart of a method 10 to establish a secure channel between the party 1 and the software payload 2. For this, it will be assumed that the owner has already sent the payload 2 to the CSP 5 and it is running into a HW TEE 4 described in figure 1.

Method 10 comprises the following steps: first, the party 1 generates and sends 11 at least a nonce (Nonce-Broker) to the software payload 2. Then, the payload 2 generates 12 a payload key pair: public key (KpubPayload) and private key (KprivPayload). The payload mixes 13 the KpubPayload with NonceBroker as a "modified" nonce (AttestationNonce) to be provided to the HW TEE. That is, payload 2 will provide the HW TEE 4 with the AttestationNonce for computing the attestation instead of the original NonceBroker generated by the party (e.g., the broker).

After, HW TEE 4 computes 14 an attestation (Attestation Payload Report) using at least this AttestationNonce. AttestationPayloadReport will be retrieved by the payload 2 and forwarded 15 to the party with the KpubPayload.

Once received by the party 1, it reproduces the same mixing done by the payload but using the nonce it originally sent (i.e., NonceBroker) instead. Therefore, if the mixing output is the same, it is certain that no attack occurred. Therefore, the party 1 can verify 16 that it is the same data it originally sent. Finally, the payload 2 and the party 1 generates 17 a session key and thus establish 18 a secure channel between them.

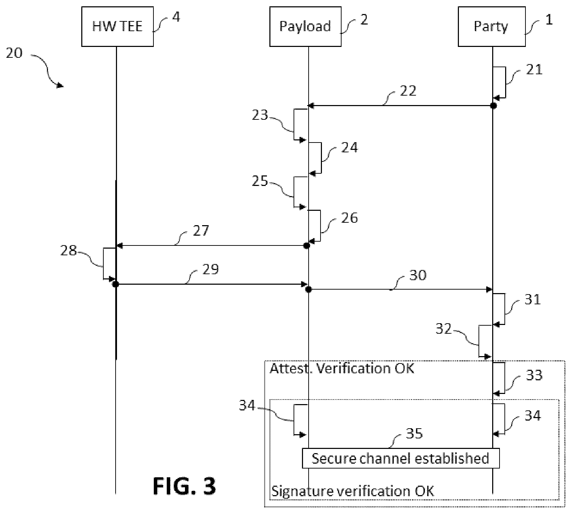

**Figure 3** depicts schematic diagram of an embodiment of the method 20 to establish a secure channel between the party 1 and the software payload 2.

Alike traditional schemes, first, the payload 2 will be started by the owner and measured by the HW TEE. The payload sends a message to the HW TEE in order to generate an encryption key for the subsequent payload execution and, in addition, HE TEE measures the firmware running on the payload 2 during boot. Just after, the payload 2 will normally send a liveness notification to the owner 1.

If the party is a broker, once the payload starts, depending on the owner choice (e.g., set by policies), the payload 2 may directly contact the broker or, alternatively, the owner may instruct the broker to contact the payload.

Preferably, from that point, the establishment of the secure channel according to this invention starts. In particular, in the following, it will be described a non-authenticated key-agreement protocol of the type of Elliptic Curve Diffie-Hellman, ECDH, protocol used for generating the session key by the software payload 2 and the party 1.

As it can be seen from figure 3, the party 1 generates 21 party public data (ECDHBrokerPubElt) and Nonce-Broker, and sends 22 them to the payload 2. The party also stores this NonceBroker for verifying afterwards the attestation.

Then, the payload 2 generates 23 ECDS key pair: KpubPayload / KprivPayload. The payload will also generate 24 payload public data (ECDHPayloadPubElt) and sign 25 this ECDHPayloadPubElt using KprivPayload resulting in ECDHPayloadPubEltSigned.

Next, the payload will compute 26 a hash of the KpubPayload further scrambling this hash output with the NonceBroker. In other words, computing:

$$XOR(hash(KpubPayload), NonceBroker) = AttestationNonce$$

This AttestationNonce will be sent 27 by the payload to the HW TEE for computing 28 the attestation. In a traditional workflow, the payload would send to the HW TEE the original NonceBroker sent by the user but, according to the invention, the AttestationNonce will be used instead. The skilled person would understand that the payload will also send specific parameters required by the specific HW TEE on a normal attestation workflow. Then, once received, the HW TEE 4 computes the attestation using at least this AttestationNonce thus giving rise to AttestationPayloadReport which is further sent back 29 to the payload 2.

Then, the payload receives it (or intercepts it), and forward it 30 to the party together with KpubPayload, ECDHPayloadPubElt, ECDHPayloadPubEltSigned.

The party will receive it and reproduce 31 the mixing done by the payload but using the original NonceBroker it sent to the payload. Therefore, the party computes:

$$XOR(hash(KpubPayload), NonceBroker) = AttestationNonce'$$

and verifies 32 AttestationPayloadReport using AttestationNonce'. If the verification succeeds, the workflow continues. Otherwise, the attestation verification fails and the secure channel cannot be established. In addition, the party (either broker or owner itself) can be alerted somehow and, optionally, preventive measures may be taken such as aborting the connection with the payload.

In case the attestation can be verified, the party 1 verifies 33 ECDHPayloadPubEltSigned using KpubPayload. If the verification of the signature succeeds, the workflow continues. Otherwise, the signature verification fails and the secure channel cannot be established.

Therefore, both the software payload 2 and the party 1 separately generate 34 a shared secret using party public data and payload public data, respectively. Hence, a direct secure channel is established 35 between them.

KPrivPayload is not limited to sign the ECDH Public Elements, it may be also used to sign any other data exchanged with the party (either the broker, the owner ot both). In other embodiments, a Key Derivation Function may be used from the shared secret to have a specific signature key.

Advantageously, once the secure channel has been established, the party is able to provision the very same attested payload with some secret(s).

Still, through the lifetime of the Payload, it may be necessary for the party to have subsequent communications with it, for instance to perform secret(s) rotation.

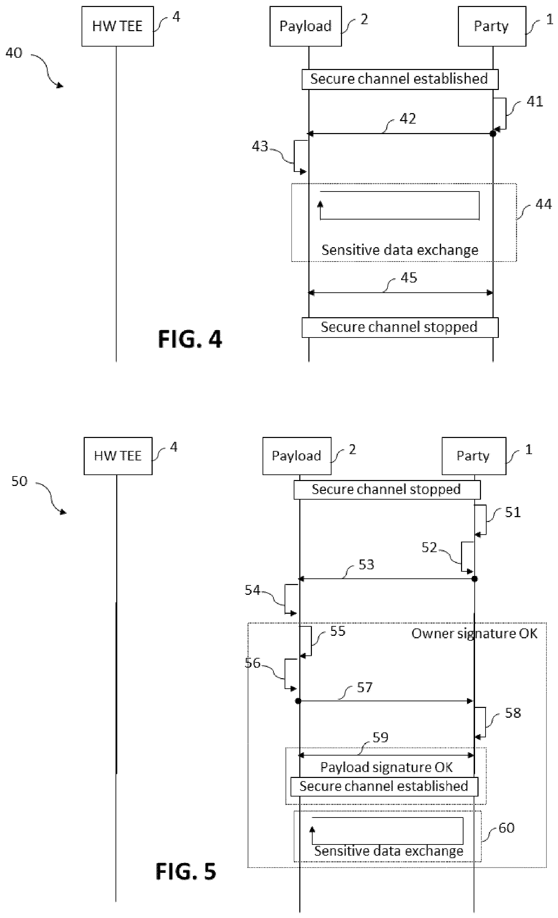

Therefore, **figure 4** depicts a schematic diagram of an embodiment of the method 40 for providing authentication means for the party. Thanks to this, both parties are authenticated and therefore the secure channel may be re-opened on demand with the very same attested payload.

That is, once the secure channel has been established between the party 1 and the software payload 2 running into the HW TEE 4 for instance, using the method 10, 20 according to figures 2 or 3, the party 1 generates 41 a party ECDSA key pair: public key (KpubBroker) and private key (KprivBroker), and then sends the KpubBroker to the payload.

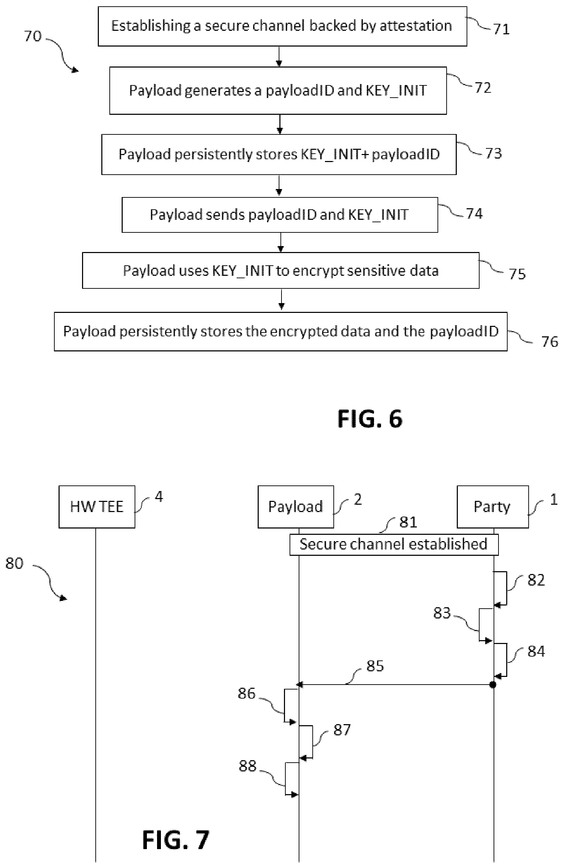

The software payload receives KpubBroker and stores it 43 in a memory under the protection of the HW TEE. This persistent storage may be used either using the native sealing capabilities of the HW TEE or, alternatively, using any of the methods according to any of figures 6 or 7.

Then, both the party 1 and the payload 2 can exchange 44 any information relevant to the application in a secure manner.

After this provisioning, since maintaining the secure channel through the whole lifetime of the payload would be too costly in term of network resources, any of the ends may require closing the secure channel 45 and the secure communication will stop.

Therefore, an authenticated secure channel backed up by attestation may be opened and closed as needed.

**Figure 5** depicts a schematic diagram of an embodiment of the method 50 to re-establish a secure and authenticated channel between the party 1 and the software payload 2.

It will be assumed that a secure channel according to the method 10, 20 of the figures 2 or 3 was already established and, afterwards, stopped.

First, the party 1 and the payload 2 perform a non-authenticated key-agreement protocol of the type of ECDH protocol for generating a session key. This session key may be different or similar to the session key already used for the establishment of the last secure channel.

Thus, the party generates 51 party public data (ECDHBrokerPubElt) and signs it 52 using KprivBroker thus resulting in ECDHBrokerPubEltSigned. Then, the party sends 53 these ECDHBrokerPubElt and ECDHBrokerPubElt-Signed to the payload 2.

Tthe software payload retrieves the previously stored (e.g., in a HW TEE memory such as RAM) KpubBroker and verifies 54 ECDHBrokerPubEltSigned using KpubBroker.

If the party signature is verified at payload's end, the workflow will continue. Otherwise, this verification will fail and the secure channel cannot be established.

If verified, the payload also generates 55 payload public data (ECDHPayloadPubElt) and retrieves KprivPayload for signing 56 this ECDHPayloadPubElt giving rise to ECDHPayloadPubEltSigned.

Then, the payload sends 57 ECDHPayloadPubElt and ECDHPayloadPubEltSigned to the party which verifies 58, at its end, the ECDHPayloadPubEltSigned using the KpubPayload.

If verified, both the payload 2 and the party 1 will generate or compute 59 a (new) shared secret using ECDHBrokerPubElt and ECDHPayloadPubElt, respectively.

Finally, a secure channel is re-established 60 between the party and the software payload running into the HW TEE allowing the party 1 and the payload 2 exchanging any sensitive information in a secure manner.

**Figure 6** depicts a schematic flowchart of a method to persistently store sensitive data by the payload 2.

It is assumed that a secure channel has been established 71 between the party 1 and the payload 2 itself when running into a HW TEE at the instance of a cloud service provider. Preferably, this secure channel is backed by the computation, by the HW TEE, of an attestation.

First, the party generates 72 a payload identifier (PayloadID) using information shared from the payload during the establishment of the secure channel. For instance, payloadID can be derived from the attestation information such as information relative to the HW TEE, the version of the payload, and/or the instantiation of the payload.

Then, the party also generates 72 a key initiator (KEY_INIT) and persistently stores 73 (i.e., at the party side) the key initiator associated to the payloadID. In a basic configuration, this KEY_INIT may be simply a symmetric key.

Then, the party sends 74 these payloadID and key initiator to the payload. And the payload uses 75 the key initiator to encrypt data.

By doing so, the payload will be able to persistently store 76 in the HW TEE memory (e.g., RAM) the encrypted data and the payloadID without relying on the privacy mechanisms of the HW TEE.

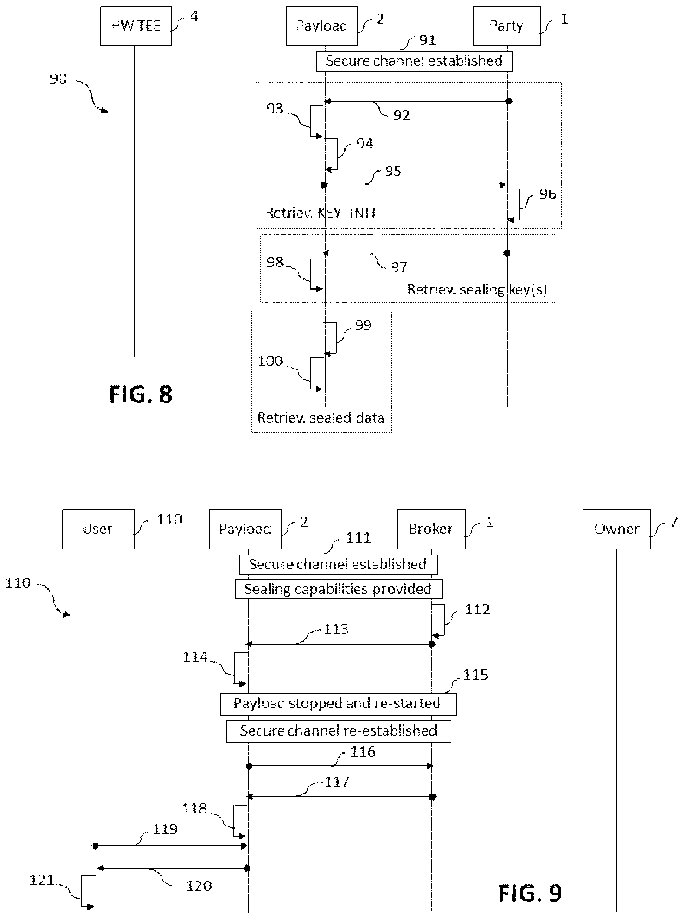

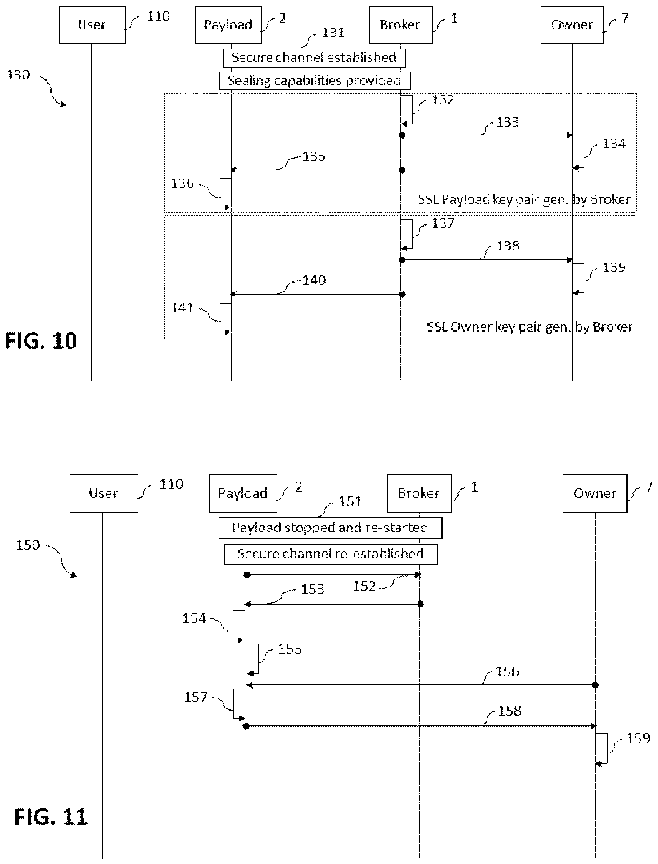

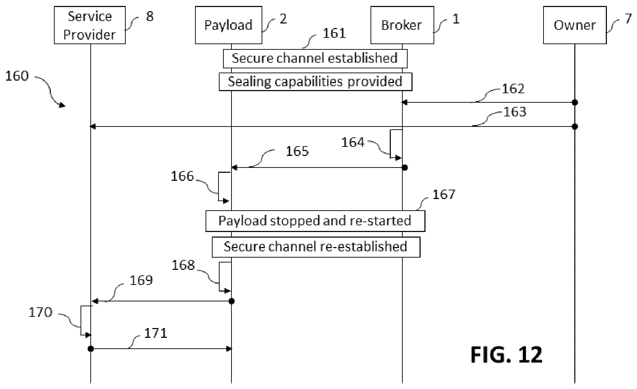

The persistently stored sensitive data may be, for instance, KpubBroker and KprivPayload. As it will be seen, the payload will also store PayloadIDCiphered (figure 7), X.509 certificate (figure 9), SSLPrivPayloadKey, SSLPubPayload-Key, SSLPubOwnerKey (figure 10), and JWT (figure 12).

Therefore, when the payload need to retrieve this persistently stored data the following steps are taken:

- the payload retrieves the stored payloadID and sends it to the party;
- the party retrieves the key initiator associated to the received payload identifier and sends this key initiator to the payload; and
- the payload uses said key initiator to decrypt the persistently stored data.

After that, the payload will delete this key initiator.

**Figure 7** depicts a preferred embodiment of a method 80 to persistently store sensitive data by the payload 2 without relying on the sealing capabilities of the HW TEE.

As mentioned, a secure channel has been established 81 between the party 1 and the payload 2, for instance, backed by the computation, by the HW TEE, of an attestation.

The party generates 82 PayloadID using information from the attestation. Then, the party encrypts the payloadID using a first encryption key (PayloadIDEncKey) resulting in PayloadIDCiphered.

Then, the party also generates 83 KEY_INIT and persistently stores 84 (i.e., at the party side) the KEY_INIT associated to the payloadID.

Then, the party sends 85 these payloadIDCiphered and KEY_INIT to the payload.

The payload passes 86 the KEY_INIT through a key derivation function, KDF, to generate a symmetric key (DataEncKey) for encrypting data, and (in addition) to generate a DataIntKey and Message Authentication Code (MAC) that allows the payload to subsequently check the integrity of the persistently stored data.

Finally, first the payload stores 87 the PayloadIDCiphered and further encrypts and MAC 88 the sensitive data.

**Figure 8** depicts a preferred embodiment of a method 90 to retrieve persistently stored sensitive data by the payload 2 as, for instance, any of the methods 70, 80 according to figures 6 or 7.

As mentioned, a secure channel has been established 91 between the party 1 and the payload 2, for instance, backed by the computation, by the HW TEE, of an attestation.

Either at the instance of the payload or as part of a workflow, the party 1 sends 92 PayloadIDEncKey to the payload 2. Then, firstly, the payload retrieves 93 the PayloadIDCiphered and further decrypts it using PayloadIDEncKey (= PayloadID). The payload will then send back to the party the PayloadID in clear.

As an alternative implementation (not shown), the payload 2 may retrieve PayloadIDCiphered and send it to the party which will decrypt it using PayloadIDEncKey thus also resulting on PayloadID in clear.

Referring back to figure 8, once the party has the PayloadID in clear, it looks for any known PayloadID and, if found, retrieves 96 the associated KEY_INIT. Otherwise, if no PayloadID can be found, an error message may appear and the communications may end.

If KEY_INIT retrieval succeeds, the party sends 97 KEY_INIT to the payload which will pass it through KDF to generate 98 DataEncKey for decrypting the sealed data, and to generate 98 DataIntKey to check the integrity of the persistently stored data.

Therefore, the payload retrieves 99 the sealed data and, accordingly, use 100 DataEncKey and DataIntKey to decrypt and check the integrity of this sealed data.

In the following usage examples, the party will be embodied as a 3<sup>rd</sup> party of trust for the owner 7, i.e., a broker 1.

These three examples rely on the authentication and sealing properties as described in connection with previous figures 1 to 8. In particular, three scenarios (or workflows) are described hereinafter for managing traditional credentials which are injected in the payload 2 by the broker 1 so the payload is enabled to use traditional native cloud environment.

The skilled person shall understand that these scenarios, even described separately for illustrative purposes, may coexist for providing the payload with more than one functionality.

The first scenario in connection with **figure 9** describes a situation when the owner needs to provide a certificate for a service (e.g., web-service) provided by the running payload. The inventions allows linking this certificate (usable by the web-service) to the attestation.

Namely, figure 9 depicts a schematic diagram of an embodiment of the method 110 to establish HTTPS connectivity for a user 110 of a web-service provided by the attested payload 2.

In the following, it is assumed that the payload 2 and the broker 1 have already 111 established an authenticated secure channel backed by the attestation and the payload can store persistently the secret(s) injected by either the broker or the owner.

Then, the broker 1 signs 112 (e.g., using the generated KprivBroker) a certificate (e.g., a X.509 certificate) private key, and sends the signed certificate to the payload 2. Finally, the payload will store persistently 114 the signed certificate.

The certificate is configured to establish connectivity, such as HTTPS connectivity, to the web-service provided by the running payload.

Next, the stop and re-start of the payload is optional and the workflow may equally continue after step 114. Assuming that the secure channel has been re-established, the payload 2 will obtain and send 116 its PayloadID (see, for instance, figure 8) to the broker 1, which will, in return, send back to the payload 2 the KEY_INIT. The payload 2 uses KEY_INIT this KEY_INIT to generate DataEncKey and DataIntKey for decrypting and check the integrity of the sealed data, respectively.

The payload 2 then configures 118 the web-service with the X.509 certificate.

Thus, when the user tries to connect 119, the payload signs a message 120 using its certificate which can be checked 121 by the user.

If the user verifies the X.509 certificate used by the payload 2, HTTPS connection is enabled for the web service running in the payload 2. For instance, if the owner 7 provides services (e.g., API, REST API or web service) for different companies or applicants (i.e., users 4) then these users need to be in the certificate chain of the broker.

In a second scenario, **figure 10** depicts a schematic diagram of an embodiment of the method to setup a SSL connectivity between the owner and its attested payload. That is, this method 130 allows the owner 7 to directly manage its payload 2 using Secure Sockets Layer, SSL, connection.

As mentioned, the owner cannot inject certificates in the traditional manner (e.g., when starting the instance) since there no confidentiality and, thus, someone may stole them and masquerade your payload. Therefore, the idea underlying this embodiment is to leverage the secure channel backed by attestation so that the payload 2 and owner 7 uses the broker 1 to securely send the relevant certificates for configuring a Secure Shell, SSH, client-server system.

Again, it is assumed that the payload and broker have established a secure channel and performed the necessary actions for the payload to seal data 131.

First, SSL key pairs are to be generated for the payload 2 and for the owner 7. Throughout figure 10, these key pairs will be generated by the broker 1 but, in other embodiments (not shown), some or all of these key pairs may be generated by the payload or owner and transferred through the broker to the other party.

In addition, in an embodiment (not shown), the generation of these SSL key pairs by the broker (or the owner for the owner key pair) can be done offline and, at least, the corresponding certificate sent to (or stored by) the owner.

Referring back to figure 10, the broker 1 generates 132 SSL payload key pair: public key (SSLPubPayloadKey) and private key (SSLPrivPayloadKey) and sends 133 SSLPubPayloadKey to the owner 7 which uses it to configure 134 ~/.ssh/known_hosts. That is, the owner uses SSLPubPayloadKey to update its "known_hosts" configuration file and be able to automatically authenticate the payload when accessing it through an SSH session.

With the payload initiated, the broker 1 sends 135 SSLPubPayloadKey and SSLPrivPayloadKey to the payload which will store 136 them using data sealing.

Concerning the SSL owner key pair, the broker generates 137 it: public key (SSLPubOwnerKey) and private key (SSLPrivOwnerKey). Then, the broker sends 138 SSLPubOwnerKey and SSLPrivOwnerKey to the owner which uses them to configure 139 ~/.ssh/id_*. Finally, the owner also stores SSLPrivOwnerKey.

Then, the broker sends 140 SSLPubOwnerKey to the initiated payload which stores 136 it using sealing capabilities.

**Figure 11** depicts a schematic diagram of an embodiment of the method to establish SSL connectivity for the owner of the attested payload for its remote management.

It is assumed that, for instance, the payload has stopped and re-started so that the secure channel had to be re-established 151. In addition, the data exchange protocol of figure 8 is also performed 152, 153 and the payload is now able to retrieve its persistently stored data. The skilled person recognizes that the following steps may take place just after fig. 10 without the need to close and re-established the secure channel.

The payload configures 154 ~/.ssh/*_key using SSLPrivPayloadKey, and configures 155 ~/.ssh/authorized_keys using SSLPubOwnerKey.

Therefore, when the owner tries to connect 156 using SSLPrivOwnerKey, the payload checks 157 whether SSLPubOwnerKey is in ~/.ssh/authorized_keys and, if so, authenticates it.

The payload sends back 158 to the owner a signed message using SSLPrivPayloadKey and the owner checks whether SSLPubPayloadKey is in ~/.ssh/known_hosts and, if so, authenticates the payload.

As a result, the configuration of this SSH client-server system entails a transparent SSL connection, e.g., HTTPS connection, for the owner to administrate its payload(s). In other words, once this configuration has been performed, there is nothing specific to the attestation or confidential computing. It allows a simple management where, for instance, every time the system re-starts, the payload restarts.

Finally, **figure 12** depicts a schematic diagram of an embodiment of the method 160 to prove to a service provider that the payload has been attested for its further use. In particular, this method 160 allows the payload accessing services to address e.g., APIs.

Again, a secure channel has been established between payload 2 and broker 1 and, in addition, the payload has been provided with data sealing capabilities 161 according to figures 1 to 8.

First, the owner defines 162 JSON Web Token, JWT-like token, policies to the broker, and configures 163 the service provider to accept the JWT from the broker. This may occur offline, i.e., without initiating the payload. Thus, the owner configures its service access to the service provide to establish also trust with the broker-generated JWT.

The broker then generates and signs 164 (e.g., using KprivBroker) a token according to policies setup by the owner. Then, once the payload is initiated, the broker sends 165 the signed token to the payload which, in turn, stores 166 it.

Again, it is described that, optionally, the payload has being stopped and re-started so that the secure channel had to be re-established 167 again.

Next, the payload configures 168 the application with JWT.

In use, the payload tries to connect 169 the service provider using JWT. Then, the service provider checks 170 the JWT (this process is out of the scope of this invention and hence it is not explained here) and, if verified, the service provider provides 171 the service to the payload.

The service provider is able to verify the signature of the payload because the broker has already signed the JWT with a standard format (e.g., the certificate of the broker can be retrieved for verifying the signature to accept or not the JWT).

The skilled person would recognize that these defined functionalities may be implemented as a library. Therefore, the developer can decide to use several payloads: one for the database, one for the webserver, one for the back-end, etc.

**Claims**

1. Computer-implemented method (10) to establish a secure channel between a party (1), for instance a broker, and a software payload (2) of an owner when running into a hardware-based trusted execution environment, HW TEE, at the instance of a cloud service provider, the method (10) comprising the following steps:

   • sending (11), by the party (1), at least a nonce to the software payload (2);
   • generating (12), by the software payload (2), a payload key pair: public key and private key;
   • mixing (13), by the software payload (2), the payload public key with the nonce;
   • computing (14), by the HW TEE, an attestation using at least this nonce mixed with the payload public key;
   • sending (15), by the software payload (2), at least the attestation, and the payload public key to the party (1);
   • verifying (16), by the party (1), the attestation using the sent nonce mixed with the received payload public key;
   • generating (17), by the software payload (2) and the party (1), a session key between them; and
   • establishing the secure channel between the party and the software payload (2) running into the HW TEE.

2. Method (10) according to claim 1, further comprising the following steps for generating the session key by the software payload (2) and the party (1) using a non-authenticated key-agreement protocol such as one based on a Elliptic Curve Diffie-Hellman, ECDH, protocol:

   • generating and sending, by the party (1), party public data to the software payload (2);
   • generating, by the software payload (2), payload public data and signing this payload public data using the generated payload private key;
   • sending, by the software payload (2), the payload public data and the signed payload public data to the party (1);
   • verifying, by the party (1), the signed payload public data using the received payload public key; and
   • computing, by the software payload (2) and the party (1), a shared secret using party public data and payload public data, respectively.

3. Method (10) according to any of claims 1 or 2, wherein, once the secure channel has been established between the party (1) and the software payload (2) running into the HW TEE, the party (1) sends a party authentication means to the payload, this party authentication means being configured to allow subsequent authentication of the owner to the payload to re-establish a secure channel.

4. Method (10) according to claim 3, wherein, after receiving the authentication means, the software payload (2) stores it persistently in a memory under the protection of the HW TEE.

5. Method (10) according to claim 4, wherein the method (10) comprises the following steps to allow the payload to persistently store data:

   • generating, by the party (1), a payload identifier using information shared from the payload during the establishment of the secure channel;
   • generating, by the party (1), a key initiator and persistently storing at the party side the key initiator associated to the payload identifier;
   • sending, by the party (1), the payload identifier and the key initiator to the payload;
   • using the key initiator, by the payload, to encrypt data; and
   • persistently storing, by the payload, the encrypted data and the payload identifier.

6. Method (10) according to any of claims 1 to 5, wherein the running payload (2) provides a web-service, the method (10) further comprising:

   • signing, by the party (1), a certificate, such as a X.509 certificate private key, and
   • sending, by the party (1), the signed certificate to the payload (2) which will use the certificate to establish connectivity, such as HTTPS connectivity, to the web-service.

7. Method (10) according to any of claims 1 to 6, wherein the party (1) is a broker, the method (10) further comprising the following steps to allow the owner of the payload (2) to directly communicate with and manage the payload (2)

   • generating, either by the payload itself or the broker, a Secure Sockets Layer, SSL, payload key pair: public key and private key;

- storing persistently, by either the broker and/or the owner, the SSL payload public key;
- storing persistently, by the payload, the SSL payload private key;
- generating, either by the owner itself or the broker, a SSL owner key pair: public key and private key;
- storing persistently, by either the broker and/or the payload, the SSL owner public key; and
- storing persistently, by the owner, the SSL owner private key.

8. Method (10) according to claim 7, wherein the method (10) further comprises:

- using, by the payload, the stored SSL payload private key for configuring a Secure Shell, SSH, server; and
- using, by the owner, the stored SSL payload public key to automatically authenticate the payload when accessing it through an SSH session.

9. Method (10) according to any of claims 7 or 8, wherein both the SSL payload key pair and the SSL owner key pair are generated by the broker.

10. Method (10) according to any of claims 1 to 9, wherein the method (10) further comprises:

- configuring, by the owner or the party (1), a second party to accept a token such as a JSON Web Token, JWT-like token;
- generating, by the party (1), a token according to policies from the owner;
- signing, by the party (1), the token;
- sending, by the party (1), the signed token to the payload; and
- storing persistently, by the payload, the token.

11. Method (10) according to any of claims 1 to 10, wherein the owner sets at least one policy for delegating the management of the life cycle of at least one credential to the party (1).

12. Method (10) according to any of the claims 1 to 11, wherein to re-establish an authenticated secure channel between a party (1) and the software payload (2) of an owner when running into a hardware-based trusted execution environment, HW TEE, at the instance of a cloud service provider, the method (10) comprising the following steps:

- establishing a secure channel according to the method (10) of any of claims 1 to 11;
- generating, by the party (1), new owner public data
- signing, by the party, this new party public data and sending it to the software payload (2);
- retrieving, by the software payload (2), party authentication means configured to allow subsequent authentication of the party (1) to the payload to re-establish a secure channel;
- verifying, by the software payload (2), the signed new party public data by using the party authentication means;
- generating, by the software payload (2), new payload public data and signing this payload public data using the payload private key;
- sending, by the software payload (2), the new payload public data and the signed new payload public data to the party (1);
- verifying, by the party (1), the signed new payload public data using the payload public key;
- computing, by the software payload (2) and the party (1), a new shared secret using new party public data and new payload public data, respectively;
- generating, by the software payload (2) and the party (1), a session key between them; and
- re-establishing the secure channel between the party (1) and the software payload (2) running into the HW TEE.

13. System for establishing a secure channel between a party and a software payload (2) of an owner when running into a hardware-based trusted execution environment, HW TEE, at the instance of a cloud service provider, the system comprising:

- the party (1) being configured to communicate with the software payload (2) running into the HW TEE, the payload itself and the HW TEE operated by a cloud service provider;
wherein the party (1) is further configured to send at least a nonce to the software payload (2);
- a software payload (2) is further configured to:

  o receive at least the nonce sent from the party (1);
  o generate a payload key pair: public key and private key;

o mix the payload public key with the nonce; and
◦ send to the HW TEE said payload public key mixed with the nonce;

- the HW TEE is configured to compute an attestation using at least this received nonce mixed with the payload public key; and to send said attestation to the software payload (2);
- the software payload (2) is further configured to send at least the attestation, and the payload public key to the party (1);
- the party (1) is further configured to receive the attestation and the payload public key, mix the received payload public key with the sent nonce, and verify the received attestation using this mixed information; and
- the software payload (2) and the party (1) being further configured to generate a session key between them thus establishing the secure channel between them.

14. Party (1) for establishing a secure channel with the software payload (2) when running into a HW TEE at the instance of a cloud service provider, the party being configured to communicate with the software payload (2) when running into the HW TEE, wherein the party (1) is further configured to

- send at least a nonce to the software payload (2) for mixing the nonce with a generated payload public key; and
- receive, from the software payload (2), said payload public key and an attestation computed by the HW TEE using said mix of the nonce with the payload public key;
- mix the received payload public key with the sent nonce, and verify the received attestation from the software payload (2) using this mixed information; and
- generate a session key thus establishing the secure channel with the software payload (2).

15. Software payload (2) for establishing a secure channel with a party (1) when running into a HW TEE at the instance of a cloud service provider, the software payload (2) being configured to run into the HW TEE operated by the cloud service provider;
wherein the software payload (2) is further configured to:

- receive at least a nonce from the party (1);
- generate a payload key pair: public key and private key;
- mix the payload public key with the nonce; and
- send to the HW TEE said;
- receive, from the HW TEE, a computed attestation using said mix of the nonce with the payload public key;
- send at least said attestation, and the payload public key to the party (1); and
- generate a session key thus establishing the secure channel with the party (1) if the attestation is verified by the party (1).

16. Hardware-based trusted execution environment, HW TEE, at the instance of a cloud service provider for establishing a secure channel between a party (1) and a software payload (2) when running into the HW TEE, wherein the HW TEE is operated by the cloud service provider; wherein the HW TEE is configured to:

- receive a payload public key generated by the payload mixed with a nonce originally sent by the party (1);
- compute an attestation using at least this received nonce mixed with the payload public key; and
- send said attestation to the software payload (2) for its further verification by the party (1).

**Patentansprüche**

1. Computerimplementiertes Verfahren (10) zum Herstellen eines sicheren Kanals zwischen einer Partei (1), beispielsweise einem Broker, und einer Software-Nutzlast (2) eines Eigentümers, wenn sie in eine hardwarebasierte vertrauenswürdigen Ausführungsumgebung, HW TEE, auf Veranlassung eines Cloud-Dienstanbieters läuft, das Verfahren (10) die folgenden Schritte umfasst:

- Senden (11), durch die Partei (1), mindestens einer Nonce an die Software-Nutzlast (2);
- Generieren (12), durch die Software-Nutzlast (2), eines Nutzlastschlüsselpaars aus: öffentlichem Schlüssel und privatem Schlüssel;
- Mischen (13), durch die Software-Nutzlast (2), des öffentlichen Nutzlastschlüssels mit der Nonce;
- Berechnen (14), durch die HW TEE, einer Attestierung unter Verwendung von mindestens dieser Nonce gemischt mit dem öffentlichen Nutzlastschlüssel;

• Senden (15), durch die Software-Nutzlast (2), mindestens der Attestierung und des öffentlichen Nutzlastschlüssels an die Partei (1);

• Verifizieren (16), durch die Partei (1), der Attestierung unter Verwendung der gesendeten Nonce, gemischt mit dem empfangenen öffentlichen Nutzlastschlüssel;

• Generieren (17), durch die Software-Nutzlast (2) und die Partei (1), eines Sitzungsschlüssels zwischen ihnen; und

• Herstellen des sicheren Kanals zwischen der Partei und der Software-Nutzlast (2), die in die HW TEE läuft.

2. Verfahren (10) nach Anspruch 1, ferner umfassend die folgenden Schritte zum Generieren des Sitzungsschlüssels durch die Software-Nutzlast (2) und der Partei (1) unter Verwendung eines nicht authentifizierten Schlüsselvereinbarungsprotokolls, wie eines, das auf einem Elliptic-Curve-Diffie-Hellman-Protokoll, ECDH-Protokoll, basiert:

• Generieren und Senden, durch die Partei (1), öffentlicher Daten der Partei an die Software-Nutzlast (2);

• Generieren öffentlicher Nutzdaten durch die Software-Nutzlast (2) und Signieren dieser öffentlichen Nutzdaten unter Verwendung des generierten privaten Nutzlastschlüssels;

• Senden, durch die Software-Nutzlast (2), der öffentlichen Nutzdaten und der signierten öffentlichen Nutzdaten an die Partei (1);

• Verifizieren, durch die Partei (1), der signierten öffentlichen Nutzdaten unter Verwendung des empfangenen öffentlichen Nutzdatenschlüssels; und

• Berechnen, durch die Software-Nutzlast (2) und die Partei (1), eines gemeinsamen genutzten Geheimnisses unter Verwendung öffentlicher Daten der Partei bzw. öffentlicher Nutzlastdaten.

3. Verfahren (10) nach einem der Ansprüche 1 oder 2, wobei, sobald der sichere Kanal zwischen der Partei (1) und der Software-Nutzlast (2), die in die HW TEE läuft, hergestellt wurde, die Partei (1) ein Partei-Authentifizierungsmittel an die Nutzlast sendet, wobei dieses Partei-Authentifizierungsmittel konfiguriert ist, um eine nachfolgende Authentifizierung des Eigentümers gegenüber der Nutzlast zu ermöglichen, um einen sicheren Kanal wiederherzustellen.

4. Verfahren (10) nach Anspruch 3, wobei, nach dem Empfangen der Authentifizierungsmittel, die Software-Nutzlast (2) diese dauerhaft in einem Speicher unter dem Schutz der HW TEE speichert.

5. Verfahren (10) nach Anspruch 4, wobei das Verfahren (10) die folgenden Schritte umfasst, um der Nutzlast die dauerhafte Speicherung von Daten zu ermöglichen:

• Generieren, durch die Partei (1), einer Nutzlastkennung, unter Verwendung von Informationen, die von der Nutzlast aus während der Herstellung des sicheren Kanals gemeinsam genutzt werden;

• Generieren, durch die Partei (1), eines Schlüsselinitiators und dauerhaftes Speichern auf der Seite der Partei, des Schlüsselinitiators, der mit der Nutzlastkennung verknüpft ist;

• Senden, durch die Partei (1), der Nutzlastkennung und des Schlüsselinitiators an die Nutzlast;

• Verwenden des Schlüsselinitiators durch die Nutzlast, um Daten zu verschlüsseln; und

• dauerhaftes Speichern, durch die Nutzlast, der verschlüsselten Daten und der Nutzlastkennung.

6. Verfahren (10) nach einem der Ansprüche 1 bis 5, wobei die laufende Nutzlast (2) einen Webdienst bereitstellt, das Verfahren (10) ferner umfassend:

• Signieren, durch die Partei (1), eines Zertifikats, wie eines privaten Schlüssels eines X.509-Zertifikats, und

• Senden, durch die Partei (1), des signierten Zertifikats an die Nutzlast (2), die das Zertifikat verwenden wird, um eine Verbindung, wie eine HTTPS-Verbindung, zu dem Webdienst herzustellen.

7. Verfahren (10) nach einem der Ansprüche 1 bis 6, wobei die Partei (1) ein Broker ist, das Verfahren (10) ferner umfassend die folgenden Schritte, um dem Eigentümer der Nutzlast (2) zu ermöglichen, mit der Nutzlast (2) direkt zu kommunizieren und diese zu verwalten

• Generieren, entweder durch die Nutzlast selbst oder den Broker, eines Secure Sockets Layer-Nutzlastschlüsselpaars, SSL-Nutzlastschlüsselpaars, aus: öffentlichem Schlüssel und privatem Schlüssel;

• dauerhaftes Speichern, durch entweder den Broker und/oder den Eigentümer, des öffentlichen SSL-Nutzlastschlüssels;

• dauerhaftes Speichern, durch die Nutzlast, des privaten SSL-Nutzlastschlüssels;

• Generieren, entweder durch den Eigentümer selbst oder den Broker, eines SSL-Eigentümerschlüsselpaars aus: öffentlichem Schlüssel und privatem Schlüssel;
• dauerhaftes Speichern, durch entweder durch den Broker und/oder die Nutzlast, des öffentlichen SSL-Eigentümerschlüssels; und
• dauerhaftes Speichern, durch den Eigentümer, des privaten SSL-Eigentümerschlüssels.

8. Verfahren (10) nach Anspruch 7, wobei das Verfahren (10) ferner umfasst:

• Verwenden, durch die Nutzlast, des gespeicherten privaten SSL-Nutzlastschlüssels zum Konfigurieren eines Secure-Shell-Servers, SSH-Servers; und
• Verwenden, durch den Eigentümer, des gespeicherten öffentlichen SSL-Nutzlastschlüssels, um die Nutzlast automatisch zu authentifizieren, beim Zugreifen darauf über eine SSH-Sitzung.

9. Verfahren (10) nach einem der Ansprüche 7 oder 8, wobei sowohl das SSL-Nutzlastschlüsselpaar als auch das SSL-Eigentümerschlüsselpaar durch den Broker generiert werden.

10. Verfahren (10) nach einem der Ansprüche 1 bis 9, wobei das Verfahren (10) ferner umfasst:

• Konfigurieren, durch den Eigentümer oder die Partei (1), einer zweiten Partei, um ein Token wie ein JSON-Web-Token oder ein JWT-ähnliches Token zu akzeptieren;
• Generieren, durch die Partei (1), eines Tokens gemäß den Richtlinien von dem Eigentümer;
• Signieren, durch die Partei (1), des Tokens;
• Senden, durch die Partei (1), des signierten Tokens an die Nutzlast; und
• dauerhaftes Speichern, durch die Nutzlast, des Tokens.

11. Verfahren (10) nach einem der Ansprüche 1 bis 10, wobei der Eigentümer mindestens eine Richtlinie zum Delegieren der Verwaltung des Lebenszyklus mindestens eines Berechtigungsnachweises an die Partei (1) festlegt.

12. Verfahren (10) nach einem der Ansprüche 1 bis 11, wobei, um einen authentifizierten sicheren Kanals zwischen einer Partei (1) und der Software-Nutzlast (2) eines Eigentümers wiederherzustellen, wenn sie in eine hardwarebasierte vertrauenswürdigen Ausführungsumgebung, HW TEE, auf Veranlassung eines Cloud-Dienstanbieters läuft, das Verfahren (10) die folgenden Schritte umfasst:

• Herstellen eines sicheren Kanals gemäß dem Verfahren (10) nach einem der Ansprüche 1 bis 11;
• Generieren, durch die Partei (1), neuer öffentlicher Eigentümerdaten
• Signieren, durch die Partei, dieser neuen öffentlichen Daten der Partei und Senden dieser an die Software-Nutzlast (2);
• Abrufen, durch die Software-Nutzlast (2), von Parteiauthentifizierungsmitteln, die konfiguriert sind, um eine nachfolgende Authentifizierung der Partei (1) gegenüber der Nutzlast zu ermöglichen, um einen sicheren Kanal wiederherzustellen;
• Verifizieren, durch die Software-Nutzlast (2), der signierten neuen öffentlichen Daten der Partei unter Verwendung der Partei-Authentifizierungsmittel;
• Generieren, durch die Software-Nutzlast (2), neuer öffentlicher Nutzdaten und Signieren dieser öffentlichen Nutzdaten unter Verwendung des privaten Nutzlastschlüssels;
• Senden, durch die Software-Nutzlast (2), der neuen öffentlichen Nutzdaten und der signierten neuen öffentlichen Nutzdaten an die Partei (1);
• Verifizieren, durch die Partei (1), der signierten neuen öffentlichen Nutzdaten unter Verwendung des öffentlichen Nutzdatenschlüssels;
• Berechnen, durch die Software-Nutzlast (2) und die Partei (1), eines neuen gemeinsamen genutzten Geheimnisses unter Verwendung öffentlicher Daten der Partei bzw. öffentlicher Nutzlastdaten;
• Generieren, durch die Software-Nutzlast (2) und die Partei (1), eines Sitzungsschlüssels zwischen ihnen; und
• Wiederherstellen des sicheren Kanals zwischen der Partei (1) und der Software-Nutzlast (2), die in die HW TEE läuft.

13. System zum Herstellen eines sicheren Kanals zwischen einer Partei und einer Software-Nutzlast (2) eines Eigentümers, wenn sie in eine hardwarebasierte vertrauenswürdigen Ausführungsumgebung, HW TEE, auf Veranlassung eines Cloud-Dienstanbieters läuft, das System umfassend:

• wobei die Partei (1) konfiguriert ist, um mit der Software-Nutzlast (2) zu kommunizieren, die in die HW TEE läuft, wobei die Nutzlast selbst und die HW TEE durch einen Cloud-Dienstanbieter betrieben werden; wobei die Partei (1) ferner konfiguriert ist, um mindestens eine Nonce an die Software-Nutzlast (2) zu senden;

• eine Software-Nutzlast (2) ferner konfiguriert ist zum:

○ Empfangen mindestens der von der Partei gesendeten Nonce (1);
○ Generieren eines Payload-Schlüsselpaars aus: öffentlichem Schlüssel und privatem Schlüssel;
○ Mischen des öffentlichen Nutzlastschlüssels mit der Nonce; und
○ Senden, an die HW TEE, des öffentlichen Nutzlastschlüssels, gemischt mit der Nonce;

• die HW TEE konfiguriert ist, um eine Attestierung zu berechnen, unter Verwendung mindestens dieser empfangenen Nonce, gemischt mit dem öffentlichen Nutzlastschlüssel; und die Attestierung an die Software-Nutzlast (2) zu senden;

• die Software-Nutzlast (2) ferner konfiguriert ist, um mindestens die Attestierung und den öffentlichen Nutzlastschlüssel an die Partei (1) zu senden;

• die Partei (1) ferner konfiguriert ist, um die Attestierung und den öffentlichen Nutzlastschlüssel zu empfangen, den empfangenen öffentlichen Nutzlastschlüssel mit der gesendeten Nonce zu mischen und die empfangene Attestierung unter Verwendung dieser gemischten Informationen zu verifizieren; und

• wobei die Software-Nutzlast (2) und die Partei (1) ferner konfiguriert sind, um einen Sitzungsschlüssel zwischen ihnen zu generieren, wobei so der sicheren Kanal zwischen ihnen hergestellt wird.

14. Partei (1) zum Herstellen eines sicheren Kanals mit der Software-Nutzlast (2), wenn sie in eine HW TEE auf Veranlassung eines Cloud-Dienstanbieters läuft, wobei die Partei konfiguriert ist, um mit der Software-Nutzlast (2) zu kommunizieren, wenn sie in die HW TEE läuft, wobei die Partei (1) ferner konfiguriert ist zum

• Senden mindestens einer Nonce an die Software-Nutzlast (2), zum Mischen der Nonce mit einem generierten öffentlichen Nutzlastschlüssel; und

• Empfangen, von der Software-Nutzlast (2), des öffentlichen Nutzlastschlüssels und eine durch die HW TEE unter Verwendung der Mischung aus Nonce und öffentlichem Nutzlastschlüssel berechnete Attestierung;

• Mischen des empfangenen öffentlichen Nutzlastschlüssels mit der gesendeten Nonce und Verifizieren der empfangene Attestierung der Software-Nutzlast (2) unter Verwendung dieser gemischten Informationen; und

• Generieren eines Sitzungsschlüssels, wobei so der sichere Kanal mit der Software-Nutzlast (2) hergestellt wird.

15. Software-Nutzlast (2) zum Herstellen eines sicheren Kanals mit einer Partei (1), wenn sie in eine HW TEE auf Veranlassung eines Cloud-Dienstanbieters läuft, wobei die Software-Nutzlast (2) konfiguriert ist, um in die durch den Cloud-Dienstanbieter betriebene HW TEE zu laufen;

wobei die Software-Nutzlast (2) ferner konfiguriert ist zum:

• Empfangen mindestens einer Nonce von der Partei (1);
• Generieren eines Payload-Schlüsselpaars aus: öffentlichem Schlüssel und privatem Schlüssel;
• Mischen des öffentlichen Nutzlastschlüssel mit der Nonce; und
• Senden dieser an die HW TEE;
• Empfangen, von der HW TEE, einer berechneten Attestierung unter Verwendung der Mischung aus der Nonce mit dem öffentlichen Nutzlastschlüssel;
• Senden mindestens der Attestierung und des öffentlichen Nutzlastschlüssels an die Partei (1); und
• Generieren eines Sitzungsschlüssel, wobei so der sichere Kanal mit der Partei (1) hergestellt wird, falls die Attestierung durch die Partei (1) verifiziert wird.

16. Hardwarebasierte vertrauenswürdige Ausführungsumgebung, HW TEE, auf Veranlassung eines Cloud-Dienstanbieters zum Herstellen eines sicheren Kanals zwischen einer Partei (1) und einer Software-Nutzlast (2), wenn sie in die HW TEE läuft, wobei die HW TEE durch den Cloud-Dienstanbieter betrieben wird; wobei die HW TEE konfiguriert ist zum:

• Empfangen eines öffentlichen Nutzlastschlüssels, der durch die Nutzlast generiert wird, gemischt mit einer Nonce, die ursprünglich durch die Partei gesendet wurde (1);
• Berechnen einer Attestierung, unter Verwendung mindestens dieser empfangenen Nonce, gemischt mit dem öffentlichen Nutzlastschlüssel; und
• Senden der Attestierung an die Software-Nutzlast (2) für ihre weitere Verifikation durch die Partei (1).

**Revendications**

1. Procédé implémenté par ordinateur (10) pour établir un canal sécurisé entre une partie (1), par exemple un courtier, et une charge utile logicielle (2) d'un propriétaire lors d'une exécution dans un environnement d'exécution de confiance à base de matériel, HW TEE, au niveau de l'instance d'un fournisseur de service en nuage, le procédé (10) comprenant les étapes suivantes :

   • l'envoi (11), par la partie (1), d'au moins un nonce à la charge utile logicielle (2) ;
   • la génération (12), par la charge utile logicielle (2), d'une paire de clés de charge utile : une clé publique et une clé privée ;
   • le mélange (13), par la charge utile logicielle (2), de la clé publique de charge utile avec le nonce ;
   • le calcul (14), par le HW TEE, d'une attestation à l'aide d'au moins ce nonce mélangé avec la clé publique de charge utile ;
   • l'envoi (15), par la charge utile logicielle (2), au moins de l'attestation, et de la clé publique de charge utile à la partie (1) ;
   • la vérification (16), par la partie (1), de l'attestation à l'aide du nonce envoyé mélangé avec la clé publique de charge utile reçue ;
   • la génération (17), par la charge utile logicielle (2) et la partie (1), d'une clé de session entre elles ; et
   • l'établissement du canal sécurisé entre la partie et la charge utile logicielle (2) s'exécutant dans le HW TEE.

2. Procédé (10) selon la revendication 1, comprenant en outre les étapes suivantes permettant de générer la clé de session par la charge utile logicielle (2) et la partie (1) à l'aide d'un protocole d'accord par clé non authentifiée tel qu'un protocole à base d'un protocole Diffie-Hellman à courbe elliptique, ECDH :

   • la génération et l'envoi, par la partie (1), de données publiques de partie à la charge utile logicielle (2) ;
   • la génération, par la charge utile logicielle (2), de données publiques de charge utile et le fait de signer ces données publiques de charge utile à l'aide de la clé privée de charge utile générée ;
   • l'envoi, par la charge utile logicielle (2), des données publiques de charge utile et des données publiques de charge utile signées à la partie (1) ;
   • la vérification, par la partie (1), des données publiques de charge utile signées à l'aide de la clé publique de charge utile reçue ; et
   • le calcul, par la charge utile logicielle (2) et la partie (1), d'un secret partagé, à l'aide de données publiques de partie et de données publiques de charge utile, respectivement.

3. Procédé (10) selon l'une quelconque des revendications 1 ou 2, dans lequel, une fois que le canal sécurisé a été établi entre la partie (1) et la charge utile logicielle (2) s'exécutant dans le HW TEE, la partie (1) envoie un moyen d'authentification de partie à la charge utile, ce moyen d'authentification de partie étant configuré pour permettre une authentification ultérieure du propriétaire à la charge utile pour rétablir un canal sécurisé.

4. Procédé (10) selon la revendication 3, dans lequel, après réception du moyen d'authentification, la charge utile logicielle (2) le stocke de façon persistante dans une mémoire sous la protection du HW TEE.

5. Procédé (10) selon la revendication 4, dans lequel le procédé (10) comprend les étapes suivantes pour permettre à la charge utile de stocker de façon persistante des données :

   • la génération, par la partie (1), d'un identificateur de charge utile à l'aide d'informations partagées en provenance de la charge utile pendant l'établissement du canal sécurisé ;
   • la génération, par la partie (1), d'un initiateur de clé et le stockage persistant au niveau du côté partie de l'initiateur de clé associé à l'identificateur de charge utile ;
   • l'envoi, par la partie (1), de l'identificateur de charge utile et de l'initiateur de clé à la charge utile ;
   • l'utilisation de l'initiateur de clé, par la charge utile, pour crypter des données ; et
   • le stockage persistant, par la charge utile, des données cryptées et de l'identificateur de charge utile.

6. Procédé (10) selon l'une quelconque des revendications 1 à 5, dans lequel la charge utile (2) en cours d'exécution fournit un service web, le procédé (10) comprenant en outre :

   • la signature, par la partie (1), d'un certificat, tel qu'une clé privée de certificat X.509, et
   • l'envoi, par la partie (1), du certificat signé à la charge utile (2) qui utilisera le certificat pour établir une connectivité, telle qu'une connectivité HTTPS, au service web.

**7.** Procédé (10) selon l'une quelconque des revendications 1 à 6, dans lequel la partie (1) est un courtier, le procédé (10) comprenant en outre les étapes suivantes pour permettre au propriétaire de la charge utile (2) de communiquer directement avec et gérer la charge utile (2)

- la génération, soit par la charge utile elle-même ou par le courtier, d'une paire de clés de charge utile Secure Sockets Layer, SSL : une clé publique et une clé privée ;
- le stockage persistant, par le courtier et/ou le propriétaire, de la clé publique de charge utile SSL ;
- le stockage persistant, par la charge utile, de la clé privée de charge utile SSL ;
- la génération, soit par le propriétaire lui-même soit par le courtier, d'une paire de clés de propriétaire SSL : une clé publique et une clé privée ;
- le stockage persistant, par le courtier et/ou par la charge utile, de la clé publique de propriétaire SSL ; et
- le stockage persistant, par le propriétaire, de la clé privée de propriétaire SSL.

**8.** Procédé (10) selon la revendication 7, dans lequel le procédé (10) comprend en outre :

- l'utilisation, par la charge utile, de la clé privée de charge utile SSL stockée permettant de configurer un serveur shell sécurisé, SSH ; et
- l'utilisation, par le propriétaire, de la clé publique de charge utile SSL stockée pour authentifier automatiquement la charge utile lorsqu'on y accède par le biais d'une session SSH.

**9.** Procédé (10) selon l'une quelconque des revendications 7 ou 8, dans lequel tant la paire de clés de charge utile SSL que la paire de clés de propriétaire SSL sont générées par le courtier.

**10.** Procédé (10) selon l'une quelconque des revendications 1 à 9, dans lequel le procédé (10) comprend en outre :

- la configuration, par le propriétaire ou la partie (1), d'une seconde partie pour accepter un jeton tel qu'un jeton de type jeton web JSON, JWT ;
- la génération, par la partie (1), d'un jeton selon des politiques en provenance du propriétaire ;
- la signature, par la partie (1), du jeton ;
- l'envoi, par la partie (1), du jeton signé à la charge utile ; et
- le stockage persistant, par la charge utile, du jeton.

**11.** Procédé (10) selon l'une quelconque des revendications 1 à 10, dans lequel le propriétaire définit au moins une politique permettant de déléguer la gestion du cycle de vie d'au moins un justificatif d'identité à la partie (1).

**12.** Procédé (10) selon l'une quelconque des revendications 1 à 11, dans lequel pour rétablir un canal sécurisé authentifié entre une partie (1) et la charge utile logicielle (2) d'un propriétaire lors d'une exécution dans un environnement d'exécution de confiance à base de matériel, HW TEE, au niveau de l'instance d'un fournisseur de service en nuage, le procédé (10) comprend les étapes suivantes :

- l'établissement d'un canal sécurisé conformément au le procédé (10) selon l'une quelconque des revendications 1 à 11 ;
- la génération, par la partie (1), de nouvelles données publiques de propriétaire
- la signature, par la partie, de ces nouvelles données publiques de partie et l'envoi de celles-ci à la charge utile logicielle (2) ;
- la récupération, par la charge utile logicielle (2), d'un moyen d'authentification de partie configuré pour permettre une authentification ultérieure de la partie (1) à la charge utile pour rétablir un canal sécurisé ;
- la vérification, par la charge utile logicielle (2), des nouvelles données publiques de partie signées en utilisant le moyen d'authentification de partie ;
- la génération, par la charge utile logicielle (2), de nouvelles données publiques de charge utile et le fait de signer ces données publiques de charge utile à l'aide de la clé privée de charge utile ;
- l'envoi, par la charge utile logicielle (2), des nouvelles données publiques de charge utile et des nouvelles données publiques de charge utile signées à la partie (1) ;
- la vérification, par la partie (1), des nouvelles données publiques de charge utile signées à l'aide de la clé publique de charge utile ;
- le calcul, par la charge utile logicielle (2) et la partie (1), d'un nouveau secret partagé à l'aide des nouvelles données publiques de partie et des nouvelles données publiques de charge utile, respectivement ;
• la génération, par la charge utile logicielle (2) et la partie (1), d'une clé de session entre elles ; et
• le rétablissement du canal sécurisé entre la partie (1) et la charge utile logicielle (2) s'exécutant dans le HW TEE.

13. Système permettant d'établir un canal sécurisé entre une partie et une charge utile logicielle (2) d'un propriétaire lors d'une exécution dans un environnement d'exécution de confiance à base de matériel, **HW TEE,** au niveau de l'instance d'un fournisseur de service en nuage, le système comprenant :

• la partie (1) étant configurée pour communiquer avec la charge utile logicielle (2) s'exécutant dans le HW TEE, la charge utile elle-même et le HW TEE exploité par un fournisseur de service en nuage ;
dans lequel la partie (1) est configurée en outre pour envoyer au moins un nonce à la charge utile logicielle (2) ;
• une charge utile logicielle (2) est configurée en outre pour :

◦ recevoir au moins le nonce envoyé en provenance de la partie (1) ;
◦ générer une paire de clés de charge utile : une clé publique et une clé privée ;
◦ mélanger la clé publique de charge utile avec le nonce ; et
◦ envoyer au HW TEE ladite clé publique de charge utile mélangée avec le nonce ;

• le HW TEE est configuré pour calculer une attestation à l'aide au moins de ce nonce reçu mélangé avec la clé publique de charge utile ; et pour envoyer ladite attestation à la charge utile logicielle (2) ;
• la charge utile logicielle (2) est configurée en outre pour envoyer au moins l'attestation, et la clé publique de charge utile à la partie (1) ;
• la partie (1) est configurée en outre pour recevoir l'attestation et la clé publique de charge utile, mélanger la clé publique de charge utile reçue avec le nonce envoyé, et vérifier l'attestation reçue à l'aide de ces informations mélangées ; et
• la charge utile logicielle (2) et la partie (1) étant configurées en outre pour générer une clé de session entre elles en établissant ainsi le canal sécurisé entre elles.

14. Partie (1) permettant d'établir un canal sécurisé avec la charge utile logicielle (2) lors d'une exécution dans un HW TEE au niveau de l'instance d'un fournisseur de service en nuage, la partie étant configurée pour communiquer avec la charge utile logicielle (2) lors d'une exécution dans le HW TEE, dans laquelle la partie (1) est configurée en outre pour

• envoyer au moins un nonce à la charge utile logicielle (2) pour le mélange du nonce avec une clé publique de charge utile générée ; et
• recevoir, en provenance de la charge utile logicielle (2), ladite clé publique de charge utile et une attestation calculée par le HW TEE à l'aide dudit mélange du nonce avec la clé publique de charge utile ;
• mélanger la clé publique de charge utile reçue avec le nonce envoyé, et vérifier l'attestation reçue en provenance de la charge utile logicielle (2) à l'aide de ces informations mélangées ; et
• générer une clé de session en établissant ainsi le canal sécurisé avec la charge utile logicielle (2).

15. Charge utile logicielle (2) permettant d'établir un canal sécurisé avec une partie (1) lors d'une exécution dans un HW TEE au niveau de l'instance d'un fournisseur de service en nuage, la charge utile logicielle (2) étant configurée pour s'exécuter dans le HW TEE exploité par le fournisseur de service en nuage ;
dans laquelle la charge utile logicielle (2) est configurée en outre pour :

• recevoir au moins un nonce en provenance de la partie (1) ;
• générer une paire de clés de charge utile : une clé publique et une clé privée ;
• mélanger la clé publique de charge utile avec le nonce ; et
• envoyer au HW TEE celle-ci ;
• recevoir, en provenance du HW TEE, une attestation calculée, à l'aide dudit mélange du nonce avec la clé publique de charge utile ;
• envoyer au moins ladite attestation, et la clé publique de charge utile à la partie (1) ; et
• générer une clé de session en établissant ainsi le canal sécurisé avec la partie (1) si l'attestation est vérifiée par la partie (1).

16. Environnement d'exécution de confiance à base de matériel, HW TEE, au niveau de l'instance d'un fournisseur de service en nuage permettant d'établir un canal sécurisé entre une partie (1) et une charge utile logicielle (2) lors d'une exécution dans le HW TEE, dans lequel le HW TEE est exploité par le fournisseur de service en nuage ; dans lequel le HW TEE est configuré pour :

• recevoir une clé publique de charge utile générée par la charge utile mélangée avec un nonce initialement envoyé par la partie (1) ;
• calculer une attestation à l'aide au moins de ce nonce reçu mélangé avec la clé publique de charge utile ; et
• envoyer ladite attestation à la charge utile logicielle (2) pour sa vérification ultérieure par la partie (1).

FIG. 1

10

Party sends NonceBroker to the payload — 11

Payload generates key pair:
KpubPayload/KprivPayload — 12

Payload mixes KpubPayload with the
NonceBroker — 13

HW TEE computes attestation using
KpubPayload mixed with the NonceBroker — 14

Payload sends the attestation KpubPayload to the party — 15

Party verifies the attestation using original NonceBroker
mixed with the received KpubPayload — 16

Payload and party generates a session key — 17

18 — Secure channel established

**FIG. 2**

FIG. 3

**FIG. 4**

**FIG. 5**

Establishing a secure channel backed by attestation — 71

Payload generates a payloadID and KEY_INIT — 72

Payload persistently stores KEY_INIT+ payloadID — 73

Payload sends payloadID and KEY_INIT — 74

Payload uses KEY_INIT to encrypt sensitive data — 75

Payload persistently stores the encrypted data and the payloadID — 76

70

**FIG. 6**

HW TEE — 4

Payload — 2

Party — 1

80

81 Secure channel established

82

83

84

85

86

87

88

**FIG. 7**

HW TEE | 4

Payload | 2

Party | 1

90

91
Secure channel established

93
92

94

95

Retriev. KEY_INIT

96

98
97

Retriev. sealing key(s)

99

100

Retriev. sealed data

**FIG. 8**

User | 110

Payload | 2

Broker | 1

Owner | 7

110

111
Secure channel established
Sealing capabilities provided

112

113

114

115
Payload stopped and re-started
Secure channel re-established

116

117

118
119

121
120

**FIG. 9**

FIG. 10

FIG. 11

**FIG. 12**

## EP 4 423 970 B1

**Patent documents cited in the description**

- US 2019362083 A1
- WO 2018112482 A1
- US 20210117246 A1